# EUROPEAN PATENT APPLICATION

(11) **EP 4 488 343 A1**
(43) Date of publication of application: **08.01.2025**
(21) Application number: 23762805.2
(22) Date of filing: 23.02.2023
(51) Int. Cl.: C09D 127/12, C09D 5/16, C09D 7/63, C09D 7/65, C08F 259/08

(54) **ANTI-ICING COATING AND ANTI-ICING COATING FILM, AND ANTI-FOULING COATING AND ANTI-FOULING COATING FILM**

(30) Priority: 01.03.2022 CN 202210196641
(71) Applicant: Daikin Fluorochemicals (China) Co., Ltd., Jiangsu 215522 (CN)
(72) Inventor: LIU, Xing, Suzhou, Jiangsu 215522 (CN); LI, Wenbin, Suzhou, Jiangsu 215522 (CN); LIU, Weiwei, Suzhou, Jiangsu 215522 (CN); NAKAGAWA, Hideto, Suzhou, Jiangsu 215522 (CN)
(74) Representative: Goddar, Heinz J.
(86) International application number: PCT/CN2023/077833
(87) International publication number: WO 2023/165405

(57) **Abstract**

The present invention relates to an anti-icing coating and an anti-icing coating film. The anti-icing coating of the present invention contains the following components (A) to (E): component (A): a coating resin in an amount of 20 to 40% by mass, component (B): a porous filler in an amount of 10 to 30% by mass, component (C): a hydrophobic agent in an amount of 2 to 20% by mass, component (D): a wax with a melting point of 60 to 160°C in an amount of 1 to 10% by mass, component (E): an organic solvent in an amount of balance. In the coating of the present invention, component (A) can be the following modified polymer, which has: a main chain composed of (a) a fluoropolymer, and side chains based on monomers represented by general formulas (b) and (c),

CH₂=C(-R¹)-C(=O)-O-Si(-CH₃)₂-[O-Si(-CH₃)₂]ₙ-O-Si(-CH₃)₂-R² (b)

CH₂=C(-R³)-C(=O)-X-Y (c).

The present invention also relates to an anti-fouling coating and an anti-fouling coating film. The anti-fouling coating of the present invention comprises: the above-mentioned modified polymer, a curing agent and an organic solvent.

## Description

### Technical Field

The present invention relates to the field of coatings, and in particular, provides coatings and coating films for anti-icing, and coatings and coating films for anti-fouling.

### Background Art

Icing and condensation are natural phenomena. Generally speaking, icing and condensation are caused by various meteorological reasons, including temperature, humidity, convection of cold and warm air, circulation and wind speed. However, icing and condensation are detrimental to wind turbine blades, bridge cables, power systems, heat exchanger fins, etc.

For example, for wind power systems, when wind turbine blades are running under low temperature conditions, if they encounter humid air, rain, salt mist, ice or snow, etc., ice will easily form on the blades, which will not only seriously reduce the working efficiency of wind turbines and shorten the service life of the blades, but also cause great safety hazards if a large scale of the accumulated ice falls off. Therefore, the coating used for wind turbine blades should not only have excellent adhesion, good weather resistance and wear resistance, but also anti-icing and self-cleaning properties.

Current anti-icing technologies can be divided into sacrificial coating layers and hydrophobic coating layers based on two aspects, i.e. the anti-icing principle and the influence on ice adhesion. Sacrificial coating layers mainly use the surface of the coating layer to release anti-icing agents to lower the freezing point of water, forming a thin water film between the ice and the coating layer surface, making it difficult for ice to adhere to the coating layer surface. However, the use of sacrificial coating layers is greatly limited, and they cannot be used for a long period of time, while a regular coating is required. Hydrophobic coating layers achieve super-hydrophobic properties based on the micro-nano structure on the coating layer surface. However, in low-temperature and high-humidity environments, the micro-nano structure will not only fail to achieve anti-icing properties due to the entry of water vapor, but will increase the bonding strength between the ice layer and the coating layer, making it difficult to de-ice. Therefore, for low-temperature and high-humidity environments, the anti-icing effect should be achieved by mainly using sacrificial coating layers, and combining with the hydrophobic properties of the coating layer surface.

Patent document 1 (Chinese patent document with publication number CN104449317A) discloses an anti-ice-snow covering coating, which uses a low surface energy resin combining with an anti-icing agent polyethylene glycol to prepare a hydrophobic coating layer to reduce the coverage of ice and snow, but after the coating is worn, as the anti-icing agent is consumed, the coating loses its anti-icing performance. Patent document 2 (Chinese patent document with publication number CN109722150A) discloses an anti-icing wind turbine blade and its preparation method, which uses the addition of conductive fillers to lower the freezing point or increase the surface temperature of the matrix to effectively delay the formation of ice crystals and achieve an anti-icing effect. However, the coating layer requires lightning protection and cannot be used widely. In summary, the durability of the coating and coating layer surface currently prepared is poor, and it is unable to achieve a long-term and efficient anti-icing effect. A more efficient and durable coating is expected to be developed.

### Prior art documents

Patent document 1: Chinese patent document with publication number CN104449317A
Patent document 2: Chinese patent document with publication number CN109722150A

### Summary of the invention

The purpose of the present invention is to overcome the shortcomings of the prior art and provide a coating and coating film that can achieve long-term and efficient anti-icing effect. In addition, the present invention also provides a coating and coating film that can achieve long-term and efficient anti-fouling effect.

The purpose of the present invention is achieved by the following technical mean.

The first aspect of the present invention relates to a coatingcomprising the following components (A) to (E):
Component (A): a coating resin in an amount of 20 to 40% by mass,
Component (B): a porous filler in an amount of 10 to 30% by mass,
Component (C): a hydrophobic auxiliary agent in an amount of 2 to 20% by mass,
Component (D): a wax with a melting point of 60 to 160°C in an amount of 1 to 10% by mass,
Component (E): an organic solvent in an amount of balance.

In the present invention, on the one hand, the durability of the anti-icing effect is improved by the synergistic effect of the component (C) hydrophobic agent and the component (B) porous filler, and on the other hand, the durability of the anti-icing effect can be further improved by the synergistic effect of the component (D) wax having a melting point of 60 to 160°C and the component (C) hydrophobic agent.

In the present invention, preferably, the component (A) coating resin is one or more selected from hydroxyl acrylic resin, polyester resin, silicone resin, fluorocarbon resin, and fluorosilicone resin, with fluorosilicone resin being more preferred. In the present invention, component (A) can also be a modified polymer (A'), which has:
a main chain composed of (a) fluoropolymer, and
side chain(s) based on the monomers shown in formulas (b) and (c),

   CH₂=C(-R¹)-C(=O)-O-Si(-CH₃)₂-[O-Sl(-CH₃)₂]ₙO-Si(-CH₃)₂-R² (b)
in formula (b), R¹ is a hydrogen atom or a methyl group, R² is a hydrogen atom or a methyl group, and n is 3 to 200,

   CH₂=C(-R³)-C(=O)-X-Y (c)
in formula (c), R³ is a hydrogen atom or a methyl group, X is O or N, and Y is one group selected from a linear alkyl, a cyclic alkyl, a hydroxyl group, an amino group, a carboxyl group, an amide group, and an epoxy group.

In the present invention, the porous filler of component (B) is preferably a porous filler having a porosity of 30% or more, and more preferably, component (B) is one or more selected from silica, graphite, diatomaceous earth, mica powder, kaolin, calcium carbonate, titanium dioxide, zinc oxide, quartz powder, and barium sulfate, and further preferably, component (B) is one or more selected from silica, kaolin, and calcium carbonate.

In the present invention, the hydrophobic agent of component (C) is preferably one or more selected from (meth)acrylate, fluorine-containing (meth)acrylate, silicon-containing (meth)acrylate, dimethyl silicone oil, hydroxyl silicone oil, amino silicone oil, perfluoroalkane, and perfluoropolyether, and the weight average molecular weight of the hydrophobic agent of component (C) is more preferably 2000 to 50000.

In the present invention, the mass ratio (B)/(C) of the content of component (B) to the content of component (C) is preferably 0.9 to 9.4, more preferably 1.1 to 8.6, and further preferably 3.0 to 6.5.

In the present invention, the mass ratio [(B)+(C)]/(D) of the total content of component (B) and component (C) relative to the content of component (D) is preferably 2.4 to 23.6, and more preferably 7 to 20.

In the present invention, the wax having a melting point of 60 to 160°C as component (D) is preferably one or more selected from paraffin wax, polyoxyethylene wax, polyethylene wax, polypropylene wax, polyamide wax, and polytetrafluoroethylene wax.

The second aspect of the present invention relates to a coating film obtained by applying the coating of the first aspect of the present invention. The initial water contact angle of the coating film of the second aspect of the present invention is 95° to 110°. And/or, the water contact angle of the coating film of the present invention after 3000 hours of ultraviolet aging by artificial radiation exposure is 95° to 135°.

The third aspect of the present invention also relates to the use of the coating of the first aspect in anti-icing. The use of the third aspect of the present invention is preferably to use the coating of the present invention in wind turbine blades, bridge lock cables, power systems, and heat exchanger fins.

The fourth aspect of the present invention also relates to a modified polymer, which is the above-mentioned modified polymer (A').

It is preferred in the modified polymer of the fourth aspect of the present invention that, the (a) fluoropolymer contains polymerization units based on tetrafluoroethylene or chlorotrifluoroethylene.

The fifth aspect of the present invention relates to a coating comprising: the modified polymer of the fourth aspect of the present invention, a curing agent and an organic solvent.

The sixth aspect of the present invention relates to a coating film obtained by applying a coating of the fifth aspect of the present invention.

The seventh aspect of the present invention relates to a use of the coating of the fifth aspect of the present invention in anti-fouling.

### [Effects of the invention]

The coating of the first aspect and the coating film of the second aspect of the present invention can exert a good anti-icing effect and can maintain the good anti-icing effect for a long time, and are suitable for a wide range of applications in the anti-icing field of industries such as wind turbine blades, bridge lock cables, power systems, and heat exchanger fins. The coating of the fifth aspect and the coating film of the sixth aspect of the present invention can exert a long-lasting and excellent anti-fouling effect.

### Detailed description of the invention

In order to make the technical problems to be solved, the technical solutions and the beneficial effects of the present invention clearer, the present invention is further described in detail below. It should be understood that the specific embodiments are only used to explain the present invention and are not used to limit the present invention.

The first aspect of the present invention relates to a coating (hereinafter, sometimes referred to as "coating I") comprising the following components (A) to (E):
Component (A): coating resin in an amount of 20 to 40% by mass,
Component (B): porous filler in an amount of 10 to 30% by mass,
Component (C): hydrophobic agent in an amount of 2 to 20% by mass,
Component (D): wax with a melting point of 60 to 160°C in an amount of 1 to 10% by mass,
Component (E): organic solvent in an amount of balance.

### <Component (A)>

Component (A) in the present invention is a coating resin, and there is no particular limitation as long as it is a resin commonly used in the coating field. As the coating resin of component (A), it can be one or more selected from, for example, hydroxy acrylic resin, polyester resin, silicone resin, fluorocarbon resin, and fluorosilicone resin, and preferably selected from silicone resin, fluorocarbon resin, and fluorosilicone resin, and more preferably be fluorosilicone resin.

In the present invention, for hydroxy acrylic resin, in order to ensure that the coating film prepared by the anti-icing coating has good adhesion, wear resistance, weather resistance, and chemical resistance, based on the mass of the hydroxy acrylic resin as 100%, the mass percentage of hydroxyl group in the hydroxy acrylic resin is 2-5% by mass, and the mass percentage of resin solid content is 65-80% by mass; the glass transition temperature of the hydroxy acrylic resin is -40-10°C, and the flexibility is ≤1mm. Furthermore, the hydroxy acrylic resin is preferably a polyurethane-modified hydroxy acrylic resin, or the hydroxy acrylic resin is one of the composites formed by hydroxy acrylic resin and fluorine-containing or silicon-containing acrylic resins.

In the present invention, polyester resin can be divided into saturated polyester and unsaturated polyester. Saturated polyester refers to a polyester wherein the synthetic raw material for which does not contain unsaturated bonds other than benzene rings. The polyester resin used in the present invention is a low molecular weight, amorphous, branched, and cross-linkable polymer. It is formed by esterification of polyols and polyacids, and has two structures: pure linear and branched. The coating film prepared from the pure linear structure resin has good flexibility and processing performance; the coating film prepared from the branched structure resin has outstanding hardness and weather resistance. By adjusting the formula of the polyester resin, such as to have excessive polyols, hydroxyl-terminated polyesters can be obtained. If the acid is excessive, a carboxyl-terminated polyester is obtained. In the present invention, as the polyester resin of component (A) coating resin, it is more preferably a saturated polyester resin from the viewpoint of improving outdoor aging resistance. The saturated polyester resin is a polyester resin containing terminal hydroxyl functional groups, and which is cross-linked with resins such as isocyanates and amino resins to be cured and form a film.

In the present invention, the silicone resin includes, for example, polyalkyl silicone resin, polyaryl silicone resin, and polyalkylaryl silicone resin. According to the different types of functional groups, the monomers for synthesizing silicone resins can be classified into organic chlorosilane monomers, organic alkoxysilane monomers, organic acyloxysilane monomers, organosilanols, and silicone monomers containing organic functional groups. In the present invention, from the viewpoint of weather resistance, the silicone resin used as the coating resin in Component (A) is more preferably an silicone resin synthesized by the polymerization of organic alkoxysilane monomers.

In the present invention, fluorocarbon resin includes, for example, polytetrafluoroethylene (PTFE), polychlorotrifluoroethylene (PCTFE), polyvinyl fluoride (PVF), polyvinylidene fluoride (PVDF), polyperfluoropropylene (FEP), ethylene-tetrafluoroethylene copolymer (ETFE), tetrafluoroethylene-perfluoroalkyl vinyl ether copolymer (PFA), ethylene-chlorotrifluoro-ethylene copolymer (ECTFE), fluoroolefin-vinyl ether copolymer (FEVE), etc. In the present invention, the fluorocarbon resin as the coating resin of component (A) is preferably a fluoroolefin-vinyl ether copolymer (FEVE).

In the present invention, fluorosilicone resin refers to a resin polymerized from a fluorine-containing monomer and a silicon-containing monomer. According to the position of the fluorosilicone monomer, it is divided into three types: fluorine main chain silicon side chain, silicon main chain fluorine side chain, and fluorine silicon main chain polymerization. From the viewpoint of improving weather resistance and hydrophobicity, fluorine main chain silicon side chain and fluorine silicon main chain polymerization are preferred.

Silicone resin and fluorocarbon resin are combined to form fluorosilicone resin. The corrosion resistance, impact resistance, high and low temperature resistance, water and oil repellency of the fluorosilicone resin will be improved, and the adhesion, film forming performance and curing temperature of silicone resin and the price problem of organic fluorine can be improved at the same time.

Fluorosilicone resin synthesis can be divided into two categories according to the polymerization mechanism: chain polymerization and stepwise polymerization. Chain polymerization can be divided into free radical polymerization and ionic polymerization according to the way the covalent bond breaks. There are many monomers for free radical synthesis of fluorosilicone resin. Water-soluble, solvent-based and emulsion fluorosilicone resins can be prepared with fluorine-containing acrylic acid, tetrafluoroethylene, alkoxysilane and the like as monomers. The modes of ionic polymerization include anionic polymerization, cationic polymerization and coordination polymerization. Anionic and cationic polymerization can obtain polymers with narrow relative molecular weight distribution. Stepwise polymerization reaction is mainly to obtain fluorosilicone polymers through polycondensation of fluorine-containing silane or fluorine-containing siloxane, and then react with acrylates to obtain fluorosilicone acrylate polymers.

In the present invention, component (A) may also be a modified polymer (A'), which contains:
a main chain composed of (a) a fluoropolymer, and
side chain(s) based on monomers represented by the following general formulas (b) and (c),

   CH₂=C(-R¹)-C(=O)-O-Si(-CH₃)₂-[O-Si(-CH₃)₂]ₙ-O-Si(-CH₃)₂-R² (b)
in formula (b), R¹ is a hydrogen atom or a methyl group, R² is a hydrogen atom or a methyl group, and n is 3 to 200,

   CH₂=C(-R³)-C(=O)-X-Y (c)
in formula (c), R³ is a hydrogen atom or a methyl group, X is O or N, and Y is one group selected from a linear alkyl group, a cyclic alkyl group, a hydroxyl group, an amino group, a carboxyl group, an amide group, and an epoxy group.

### <Main chain>

The modified polymer of the present invention has a main chain composed of (a) a fluoropolymer.

Fluoropolymer is well known as a resin having excellent heat resistance, chemical resistance, weather resistance, etc. In addition to the excellent heat resistance, chemical resistance, weather resistance, etc. inherent in fluoropolymer, the modified polymer of the present invention further possesses long-lasting excellent anti-fouling properties by having specific side chains.

The above-mentioned fluoropolymer preferably has a unit represented by -CHR- (wherein R is a hydrogen atom or a monovalent organic group). It is sufficient if at least one -CHR- is bonded to the main chain. In addition, the above-mentioned fluoropolymer also preferably contains a polymerization unit of -CH2-CHR-.

In the above-mentioned unit represented by -CHR-, R is a hydrogen atom or a monovalent organic group.

The monovalent organic group includes an alkyl group which may have one or more substituents, an alkenyl group which may have one or more substituents, an alkynyl group which may have one or more substituents, a cycloalkyl group which may have one or more substituents, a cycloalkenyl group which may have one or more substituents, a cycloalkadienyl group which may have one or more substituents, an aryl group which may have one or more substituents, an aralkyl group which may have one or more substituents, a non-aromatic heterocyclic group which may have one or more substituents, a heteroaryl group which may have one or more substituents, a cyano group, an acyl group, RaO-, RaCO-, RaSO₂-, RaCOO-, RaNRaCO-, RaCONRa-, RaOCO-, RaOSO₂- and RaNRbSO₂- (in these formulas, Ra is independently an alkyl group which may have one or more substituents, an alkenyl group which may have one or more substituents, an alkynyl group which may have one or more substituents, a cycloalkyl group which may have one or more substituents, a cycloalkenyl group which may have one or more substituents, a cycloalkadienyl group which may have one or more substituents, an aryl group which may have one or more substituents, an aralkyl group which may have one or more substituents, a non-aromatic heterocyclic group which may have one or more substituents, or/and a heteroaryl group which may have one or more substituents, and Rb is independently H or an alkyl group which may have one or more substituents).

As the above-mentioned organic group, an alkyl group which may have one or more substituents is preferred.

In addition, in the present specification, "substituent" refers to a group that can be substituted. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, aromatic sulfinyl group, an aliphatic thio group, an aromatic thio group, a hydroxyl group, a cyano group, a sulfo group, a carboxyl group, an aliphatic oxyamino group, an aromatic oxyamino group, a carbamoylamino group, a sulfamoylamino group, a halogen atom, a sulfamoylcarbamoyl group, a carbamoylsulfamoyl group, a dialiphatic oxyphosphinyl group, and a diaromatic oxyphosphinyl group.

The above-mentioned aliphatic group may be saturated or unsaturated, and may have a hydroxyl group, an aliphatic oxy group, a carbamoyl group, an aliphatic oxycarbonyl group, an aliphatic thio group, an amino group, an aliphatic amino group, an acylamino group, a carbamoylamino group and the like. As the above-mentioned aliphatic group, examples include an alkyl group having a total carbon number of 1 to 8, preferably 1 to 4, such as a methyl group, an ethyl group, a vinyl group, a cyclohexyl group, a carbamoylmethyl group and the like.

The above-mentioned aromatic group may have, for example, a nitro group, a halogen atom, an aliphatic oxy group, a carbamoyl group, an aliphatic oxycarbonyl group, an aliphatic thiol group, an amino group, an aliphatic amino group, an acylamino group, a carbamoylamino group, etc. Examples of the above-mentioned aromatic group include an aryl group having 6 to 12 carbon atoms, preferably 6 to 10 total carbon atoms, such as a phenyl group, a 4-nitrophenyl group, a 4-acetylaminophenyl group, a 4-methanesulfonylphenyl group, etc.

The above-mentioned heterocyclic group may have a halogen atom, a hydroxyl group, an aliphatic oxy group, a carbamoyl group, an aliphatic oxycarbonyl group, an aliphatic thiol group, an amino group, an aliphatic amino group, an acylamino group, a carbamoylamino group, etc. Examples of the above heterocyclic group include a 5- to 6-membered heterocyclic ring having 2 to 12 total carbon atoms, preferably 2 to 10 total carbon atoms, such as a 2-tetrahydrofuranyl group, a 2-pyrimidinyl group, etc.

The above-mentioned acyl group may have an aliphatic carbonyl group, an arylcarbonyl group, a heterocyclic carbonyl group, a hydroxyl group, a halogen atom, an aromatic group, an aliphatic oxy group, a carbamoyl group, an aliphatic oxycarbonyl group, an aliphatic thiol group, an amino group, an aliphatic amino group, an acylamino group, a carbamoylamino group, etc. Examples of the above-mentioned acyl group include an acyl group having a total carbon number of 2 to 8, preferably 2 to 4, such as an acetyl group, a propionyl group, a benzoyl group, a 3-pyridinecarbonyl group, etc.

The above-mentioned acylamino group may have an aliphatic group, an aromatic group, a heterocyclic group, etc., for example, an acetylamino group, a benzoylamino group, a 2-pyridinecarbonylamino group, a propanoylamino group, etc. As the above-mentioned acylamino group, an acylamino group having a total carbon number of 2 to 12, preferably 2 to 8, and an alkylcarbonylamino group having a total carbon number of 2 to 8 may be mentioned, such as an acetylamino group, a benzoylamino group, a 2-pyridinecarbonylamino group, a propanoylamino group, etc.

The above-mentioned aliphatic oxycarbonyl group may be saturated or unsaturated, and may have a hydroxyl group, an aliphatic oxy group, a carbamoyl group, an aliphatic oxycarbonyl group, an aliphatic thiol group, an amino group, an aliphatic amino group, an acylamino group, a carbamoylamino group, etc. As the above-mentioned aliphatic oxycarbonyl group, an alkoxycarbonyl group having a total carbon number of 2 to 8, preferably 2 to 4 may be mentioned, such as a methoxycarbonyl group, an ethoxycarbonyl group, a (tert-)butoxycarbonyl group, etc.

The above-mentioned carbamoyl group may have an aliphatic group, an aromatic group, a heterocyclic group, etc. As the above-mentioned carbamoyl group, examples include an unsubstituted carbamoyl group and an alkyl carbamoyl group having a total carbon number of 2 to 9, preferably an unsubstituted carbamoyl group and an alkyl carbamoyl group having a total carbon number of 2 to 5, such as a N-methyl carbamoyl group, a N,N-dimethyl carbamoyl group, a N-phenyl carbamoyl group, etc.

The above-mentioned aliphatic sulfonyl group may be saturated or unsaturated, and may have a hydroxyl group, an aromatic group, an aliphatic oxy group, a carbamoyl group, an aliphatic oxycarbonyl group, an aliphatic thiol group, an amino group, an aliphatic amino group, an acylamino group, a carbamoylamino group, etc. As the above-mentioned aliphatic sulfonyl group, example include an alkyl sulfonyl group having a total carbon number of 1 to 6, preferably a total carbon number of 1 to 4, such as methanesulfonyl, etc.

The above-mentioned aromatic sulfonyl group may have a hydroxyl group, an aliphatic group, an aliphatic oxy group, a carbamoyl group, an aliphatic oxycarbonyl group, an aliphatic thiol group, an amino group, an aliphatic amino group, an acylamino group, a carbamoylamino group, etc. As the above-mentioned aromatic sulfonyl group, examples include an arylsulfonyl group having a total carbon number of 6 to 10, such as a benzenesulfonyl group.

The above-mentioned amino group may have an aliphatic group, an aromatic group, a heterocyclic group, etc.

The above-mentioned acylamino group may have, for example, an acetylamino group, a benzoylamino group, a 2-pyridinecarbonylamino group, a propanoylamino group, etc. As the above-mentioned acylamino group, examples include an acylamino group having a total carbon number of 2 to 12, preferably an acylamino group having a total carbon number of 2 to 8, and more preferably an alkylcarbonylamino group having a total carbon number of 2 to 8, such as an acetylamino group, a benzoylamino group, a 2-pyridinecarbonylamino group, a propanoylamino group, etc.

The above-mentioned aliphatic sulfonamide group, aromatic sulfonamide group, and heterocyclic sulfonamide group may be, for example, a methanesulfonamide group, a benzenesulfonamide group, a 2-pyridinesulfonamide group, etc.

The above-mentioned sulfamoyl group may have an aliphatic group, an aromatic group, a heterocyclic group, etc. Examples of the above-mentioned sulfamoyl group include a sulfamoyl group, an alkylsulfamoyl group having 1 to 9 total carbon atoms, a dialkylsulfamoyl group having 2 to 10 total carbon atoms, an arylsulfamoyl group having 7 to 13 carbon atoms, and a heterocyclicsulfamoyl group having 2 to 12 carbon atoms. More preferred examples include a sulfamoyl group, an alkylsulfamoyl group having 1 to 7 carbon atoms, a dialkylsulfamoyl group having 3 to 6 carbon atoms, an arylsulfamoyl group having 6 to 11 carbon atoms, and a heterocyclicsulfamoyl group having 2 to 10 carbon atoms, such as a sulfamoyl group, a methylsulfamoyl group, a N,N-dimethylsulfamoyl group, phenylsulfamoyl, and a 4-pyridinesulfamoyl group, etc.

The above-mentioned aliphatic oxy group may be saturated or unsaturated, and may have a methoxy group, an ethoxy group, an isopropoxy group, a cyclohexyloxy group, a methoxyethoxy group, etc. As the above-mentioned aliphatic oxy group, examples include an alkoxy group having a total carbon number of 1 to 8, preferably 1 to 6, such as a methoxy group, an ethoxy group, an isopropoxy group, a cyclohexyloxy group, a methoxyethoxy group, etc.

The above-mentioned aromatic amino group and the heterocyclic amino group may have an aliphatic group, an aliphatic oxy group, a halogen atom, a carbamoyl group, a heterocyclic group ring-fused with the aromatic group, and an aliphatic oxycarbonyl group, and preferably may have an aliphatic group having a total carbon number of 1 to 4, an aliphatic oxy group having a total carbon number of 1 to 4, a halogen atom, a carbamoyl group having a total carbon number of 1 to 4, a nitro group, or an aliphatic oxycarbonyl group having a total carbon number of 2 to 4.

The above-mentioned aliphatic thiol group may be saturated or unsaturated, and examples include an alkylthio group having a total carbon number of 1 to 8, more preferably a total carbon number of 1 to 6, such as a methylthio group, a ethylthio group, a carbamoylmethylthio group, a tert-butylthio group, etc.

The above-mentioned carbamoylamino group may have an aliphatic group, an aryl group, a heterocyclic group, etc. As the above-mentioned carbamoylamino group, carbamoylamino group, an alkylcarbamoylamino group having a total carbon number of 2 to 9, a dialkylcarbamoylamino group having a total carbon number of 3 to 10, an aryl carbamoyl amino group having a total carbon number of 7 to 13, a heterocyclic carbamoylamino group having a total carbon number of 3 to 12 may be mentioned, preferably a carbamoylamino group, an alkylcarbamoylamino group having a total carbon number of 2 to 7, a dialkylcarbamoylamino group having a total carbon number of 3 to 6, an arylcarbamoylamino group having a total carbon number of 7 to 11, a heterocyclic carbamoylamino group having a total carbon number of 3 to 10, such as a carbamoylamino group, a methylcarbamoylamino group, a N,N-dimethylcarbamoylamino group, a phenylcarbamoylamino group, a 4-pyridinecarbamoylamino group, etc.

The above-mentioned R is preferably a functional group-containing group, and examples of the functional group include a hydroxyl group (excluding the hydroxyl group contained in the carboxyl group. The same applies hereinafter.), a carboxyl group, an ester bond (-OCO-), a group represented by -COOCO-, a cyano group, an amino group, an epoxy group, a silyl group, etc. Among them, preferably at least one group selected from the group consisting of a hydroxyl group, a carboxyl group, an ester bond, a group represented by -COOCO-, an amino group, a cyano group, and a silyl group, more preferably at least one group selected from the group consisting of a hydroxyl group, a carboxyl group, an ester bond, an amino group, and a silyl group, further preferably at least one group selected from the group consisting of a hydroxyl group, a carboxyl group, an ester bond, and an amino group, and particularly preferably at least one group selected from the group consisting of a hydroxyl group, an ester bond, and a carboxyl group. As the above-mentioned R, specifically, a carboxyl group, -Oₚ-R^{d}_{q}-OH (wherein R^{d} is a chain or branched alkylene group having 1 to 10 carbon atoms, p is 0 or 1, and q is 0 or 1), -OCO-R^{e} (wherein R^{e} is a hydrocarbon group having 1 to 10 carbon atoms), etc. As the above-mentioned R^{e}, it can be a chain or branched hydrocarbon group (such as an alkyl group, etc.), or a cyclic hydrocarbon group (such as a cycloalkyl group, a phenyl group, etc.).

The above-mentioned R is preferably a group containing a curable functional group, and as the curable functional group, examples include a hydroxyl group, a carboxyl group, a group represented by -COOCO-, a cyano group, an amino group, an epoxy group, a silyl group, etc. Among them, from the viewpoint of good curing reactivity, it is preferably at least one group selected from the group consisting of a hydroxyl group, a carboxyl group, a group represented by -COOCO-, an amino group, a cyano group, and a silyl group, more preferably at least one group selected from the group consisting of a hydroxyl group, a carboxyl group, an amino group, and a silyl group, further preferably at least one group selected from the group consisting of a hydroxyl group, a carboxyl group, and an amino group, and particularly preferably at least one group selected from the group consisting of a hydroxyl group and a carboxyl group. These curable functional groups are usually introduced into the fluoropolymer by copolymerizing monomers containing curable functional groups.

Among the above-mentioned fluoropolymers, fluoropolymers containing curable functional groups are preferred due to excellent weather resistance. As the above-mentioned fluoropolymers containing curable functional groups, examples include polymers obtained by introducing curable functional groups into fluorine-containing polymers. By having the above-mentioned structure, it is possible to achieve both weather resistance and antifouling properties at a more excellent level.

The above-mentioned fluoropolymer preferably contains a fluorine-containing monomer unit, a vinyl ester unit containing neither a hydroxyl group nor an aromatic ring, and a hydroxyl-containing monomer unit because of excellent weather resistance and easy dissolution in an ester-based solvent. By having the above-mentioned structure, it is possible to achieve both weather resistance and anti-fouling properties at a more excellent level.

As the above-mentioned fluorine-containing monomer constituting the above-mentioned fluorine-containing monomer unit, examples include tetrafluoroethylene, chlorotrifluoroethylene, vinylidene fluoride, vinyl fluoride, fluorovinyl ether, etc., and one or more of them can be used.

As the above-mentioned fluorine-containing monomer, for the reason of excellent weather resistance, it is preferably at least one selected from the group consisting of tetrafluoroethylene, chlorotrifluoroethylene and vinylidene fluoride, and more preferably at least one selected from the group consisting of tetrafluoroethylene and chlorotrifluoroethylene. By having the above-mentioned structure, it is possible to achieve both weather resistance and anti-fouling properties at a more excellent level.

As the vinyl ester constituting the above-mentioned vinyl ester unit, vinyl carboxylate is preferred, and more preferably at least one selected from the group consisting of vinyl acetate, vinyl propionate, vinyl butyrate, vinyl isobutyrate, vinyl pivalate, vinyl caproate, vinyl versatate, vinyl laurate, vinyl stearate and vinyl cyclohexylcarboxylate, and further preferably at least one selected from the group consisting of vinyl acetate, vinyl versatate, vinyl laurate, vinyl stearate and vinyl cyclohexylcarboxylate, and particularly preferably at least one selected from the group consisting of vinyl acetate and vinyl versatate.

In addition, as the above-mentioned vinyl ester, for the reason of further excellent adhesion and wear resistance, vinyl carboxylate of carboxylic acid with 6 or more carbon atoms is preferred, and vinyl carboxylate of carboxylic acid with 9 or more carbon atoms is more preferred. The upper limit of the carbon number of carboxylic acid in vinyl carboxylate is preferably 20, and more preferably 15. For the reason of excellent adhesion to the substrate, vinyl versatates such as vinyl neononanoate and vinyl neodecanoate are most preferred.

It should be noted that the above-mentioned vinyl ester does not contain any of hydroxyl groups or aromatic rings. In addition, the above-mentioned vinyl ester preferably does not contain halogen atoms.

As the hydroxyl-containing monomer constituting the above-mentioned hydroxyl-containing monomer unit, it is preferably at least one selected from the group consisting of hydroxyalkyl vinyl ether, hydroxyalkyl allyl ether, vinyl hydroxycarboxylate, hydroxycarboxylic acid allyl ester and hydroxyalkyl (meth)acrylate, more preferably at least one selected from the group consisting of hydroxyalkyl vinyl ether and hydroxyalkyl allyl ether, and further preferably hydroxyalkyl vinyl ether.

Examples of the above-mentioned hydroxyalkyl vinyl ether include 2-hydroxyethyl vinyl ether, 3-hydroxypropyl vinyl ether, 2-hydroxypropyl vinyl ether, 2-hydroxy-2-methylpropyl vinyl ether, 4-hydroxybutyl vinyl ether, 4-hydroxy-2-methylbutyl vinyl ether, 5-hydroxypentyl vinyl ether, and 6-hydroxyhexyl vinyl ether, etc.

Examples of the above-mentioned hydroxyalkyl allyl ether include 2-hydroxyethyl allyl ether, 4-hydroxybutyl allyl ether, and glycerol monoallyl ether, etc.

Examples of the above-mentioned vinyl hydroxycarboxylate include vinyl hydroxyacetate, vinyl hydroxypropionate, vinyl hydroxybutyrate, vinyl hydroxycaprate, and vinyl 4-hydroxycyclohexylacetate, etc.

Examples of the above-mentioned hydroxycarboxylic acid allyl esters include hydroxyacetic acid allyl ester, hydroxypropionic acid allyl ester, hydroxybutyric acid allyl ester, hydroxycaproic acid allyl ester, and 4-hydroxycyclohexylacetic acid allyl ester, etc.

Examples of the above-mentioned hydroxyalkyl (meth)acrylates include 2-hydroxyethyl acrylate and 2-hydroxyethyl methacrylate, etc.

As the above-mentioned hydroxyl-containing monomer, the monomer represented by the following formula (A) is more preferred,

Formula (A): CH₂=CH-(CH₂)₁-O-(CH2)ₘ OH

(wherein, l is 0 or 1, and m is an integer of 2 to 20), and at least one monomer selected from the group consisting of 4-hydroxybutyl vinyl ether, 2-hydroxyethyl vinyl ether, 2-hydroxyethyl allyl ether and 4-hydroxybutyl allyl ether is particularly preferred.

The content of the above-mentioned fluorine-containing monomer unit is preferably 30 to 60 mol%, more preferably 40 to 55 mol%, relative to the total monomer units of the fluoropolymer.

The content of the above-mentioned vinyl ester unit containing neither a hydroxyl group nor an aromatic ring is preferably 1 to 40 mol%, more preferably 10 to 30 mol%, relative to the total monomer units of the fluoropolymer.

The content of the above-mentioned hydroxyl-containing monomer unit is preferably 15 to 40 mol%, more preferably 20 to 35 mol%, relative to all monomer units of the fluoropolymer.

In this specification, the content of each above-mentioned monomer unit constituting the fluoropolymer can be calculated by appropriately combining NMR, FT-IR, elemental analysis, and fluorescent X-ray analysis according to the type of monomer.

The above-mentioned fluoropolymer preferably has a number average molecular weight of 3,000 to 100,000. The above-mentioned number average molecular weight is more preferably 5,000 or more, further preferably 8,000 or more, more preferably 50,000 or less, and further preferably 35,000 or less. If the number average molecular weight is too small, the weather resistance, solvent resistance, and stain resistance are poor, and a coating film with high hardness may not be formed; if the number average molecular weight is too large, the viscosity will increase when it is prepared to be a coating, and it may be difficult to handle. The number average molecular weight can be measured by gel permeation chromatography (GPC) using tetrahydrofuran as an eluent.

The glass transition temperature (second run) of the above-mentioned fluoropolymer determined by differential scanning calorimetry (DSC) is preferably 10 to 70°C, more preferably 15 to 60°C. If the glass transition temperature is too low, the weather resistance, solvent resistance and stain resistance are poor, and a coating film with high hardness may not be formed; if the glass transition temperature is too high, the viscosity will increase when it is prepared to be a coating, and it may be difficult to handle.

From the viewpoint of good compatibility with polyisocyanate compounds or pigments, the acid value of the above-mentioned fluoropolymer is preferably 0.6 to 50 mgKOH/g, more preferably 2 to 30 mgKOH/g.

The above-mentioned fluoropolymer may further contain monomer unit(s) other than the fluorine-containing monomer unit, the above-mentioned vinyl ester unit containing neither hydroxyl group nor aromatic ring, and the hydroxyl-containing monomer unit. For example, the fluoropolymer may contain units such as an aromatic ring-containing, hydroxy group-free vinyl carboxylate, a carboxyl group-containing monomer, an amino group-containing monomer, a hydrolyzable silyl group-containing monomer, a hydroxy group-free alkyl vinyl ether, and a halogen atom and hydroxy group-free olefin. The content of these monomer units may be 0 to 10 mol %, preferably 0.1 to 5 mol %, more preferably 0.5 to 3 mol %, based on the total monomer units of the above-mentioned fluoropolymer.

As the above-mentioned aromatic ring-containing, hydroxy group-free vinyl carboxylate, examples include vinyl benzoate, vinyl p-tert-butylbenzoate, etc.

As the above-mentioned carboxyl group-containing monomer, a monomer represented by the following formula (B) is preferred,

Formula (B): R^{1a}R^{2a}C=CR^{3a_}(CH₂)ₙ-COOH

(wherein, R^{1a}, R^{2a} and R^{3a} are the same or different, and are all hydrogen atoms or linear or branched alkyl groups with 1 to 10 carbon atoms; n is an integer not less than 0), for example, acrylic acid, methacrylic acid, vinylacetic acid, butenoic acid, pentenoic acid, hexenoic acid, heptenoic acid, octenoic acid, nonenoic acid, decenoic acid, undecenoic acid, dodecenoic acid, tridecenoic acid, tetradecenoic acid, pentadecenoic acid, hexadecenoic acid, heptadecenoic acid, octadecenoic acid, nonadecenoic acid, eicosenoic acid, 22-tricosenoic acid, etc can be mentioned. Among them, at least one selected from the group consisting of acrylic acid, butenoic acid and undecenoic acid is preferred, and at least one selected from the group consisting of acrylic acid and butenoic acid is further preferred.

In addition, as the above-mentioned carboxyl group-containing monomer, cinnamic acid, 3-allyloxypropionic acid, itaconic acid, itaconic acid monoester, maleic acid, maleic acid monoester, maleic anhydride, fumaric acid, fumaric acid monoester, vinyl phthalate, vinyl pyromellitate, citraconic acid, mesaconic acid, aconitic acid, etc. can also be mentioned.

As the above-mentioned amino group-containing monomer, for example, amino vinyl ethers represented by CH₂=CH-O-(CH₂)ₓ-NH₂ (x=0 to 10); amines represented by CH₂=CH-O-CO(CH₂)ₓ-NH₂ (x=1 to 10); and aminomethylstyrene, vinylamine, acrylamide, vinylacetamide, vinylformamide, etc can be mentioned,.

As the above-mentioned hydrolyzable silyl group-containing monomer, examples include:
(meth)acrylates such as CH₂=CHCO₂(CH₂)₃Si(OCH₃)₃,

   CH₂=CHCO₂(CH₂)₃Si(OC₂H₅)₃,

   CH₂=C(CH₃)CO₂(CH₂)₃Si(OCH₃)₃,

   CH₂=C(CH₃)CO₂(CH₂)₃Si(OC₂H₅)₃,

   CH₂=CHCO₂(CH₂)₃SiCH₃(OC₂H₅)₂,

   CH₂=C(CH₃)CO₂(CH₂)₃SiC₂H₅(OCH₃)₂,

   CH₂=C(CH₃)CO₂(CH₂)₃Si(CH₃)₂(OC₂H₅),

   CH₂=C(CH₃)CO₂(CH₂)₃Si(CH₃)₂OH,

   CH₂=CH(CH₂)₃Si(OCOCH₃)₃,

   CH₂=C(CH₃)CO₂(CH₂)₃SiC₂H₅(OCOCH₃)₂,

   CH₂=C(CH₃)CO₂(CH₂)₃SiCH₃(N(CH₃)COCH₃)₂,

   CH₂=CHCO₂(CH₂)₃SiCH₃[ON(CH₃)C₂H₅]₂,

   CH₂=C(CH₃)CO₂(CH₂)₃SiC₆H₅[ON(CH₃)C₂H₅]₂

   and etc;
vinyl silanes such as CH₂=CHSi[ON=C(CH₃)(C₂H₅)]₃,

   CH₂=CHSi(OCH₃)₃, CH₂=CHSi(OC₂H₅)₃,

   CH₂=CHSiCH₃(OCH₃)₂, CH₂=CHSi(OCOCH₃)₃,

   CH₂=CHSi(CH₃)₂(OC₂H₅), CH₂=CHSi(CH₃)₂SiCH₃(OCH₃)₂,
CH₂=CHSiC₂H₅(OCOCH₃)₂, CH₂=CHSiCH_{3[}ON(CH₃)C₂H₅]₂, vinyltrichlorosilane or their partial hydrolyzates; vinyl ethers such as trimethoxysilylethyl vinyl ether, triethoxysilylethyl vinyl ether, trimethoxysilylbutyl vinyl ether, methyldimethoxysilylethyl vinyl ether, trimethoxysilylpropyl vinyl ether, triethoxysilylpropyl vinyl ether, etc.

As the above-mentioned hydroxy group-free vinyl carboxylate, examples include methyl vinyl ether, ethyl vinyl ether, n-propyl vinyl ether, n-butyl vinyl ether, octadecyl vinyl ether, 2-ethylhexyl vinyl ether, cyclohexyl vinyl ether, isopropyl vinyl ether, isobutyl vinyl ether, etc., among which at least one selected from the group consisting of ethyl vinyl ether and cyclohexyl vinyl ether is preferred.

As the above-mentioned olefin, examples include fluorine-free olefins such as ethylene, propylene, n-butene, and isobutylene.

The hydroxyl value of the above-mentioned fluoropolymer is preferably 50 mgKOH/g or more. As the above-mentioned hydroxyl value, it is more preferably 55 mgKOH/g or more, further preferably 60 mgKOH/g or more, further more preferably 80 mgKOH/g or more, and particularly preferably 100 mgKOH/g or more, and preferably 180 mgKOH/g or less, more preferably 170 mgKOH/g or less, further preferably 160 mgKOH/g or less, and particularly preferably 150 mgKOH/g or less.

The hydroxyl value is calculated from the weight of the fluoropolymer and the molar number of -OH groups. The molar number of -OH groups can be determined by NMR measurement, IR measurement, titration, elemental analysis, etc.

The fluoropolymer can be synthesized by solution polymerization, emulsion polymerization, suspension polymerization, or bulk polymerization, and the polymer obtained by solution polymerization is preferred.

The fluoropolymer is preferably synthesized by polymerizing the monomer providing the above-mentioned unit by solution polymerization using an organic solvent or a polymerization initiator. The polymerization temperature is usually 0 to 150°C, preferably 5 to 95°C. The polymerization pressure is usually 0.1 to 10 MPaG (1 to 100 kgf/cm²G).

As the above-mentioned organic solvent, examples may include: esters such as methyl acetate, ethyl acetate, propyl acetate, n-butyl acetate, tert-butyl acetate; ketones such as acetone, methyl ethyl ketone, cyclohexanone; aliphatic hydrocarbons such as hexane, cyclohexane, octane, nonane, decane, undecane, dodecane, mineral spirits; aromatic hydrocarbons such as benzene, toluene, xylene, naphthalene, solvent naphtha; alcohols such as methanol, ethanol, tert-butyl alcohol, isopropanol, ethylene glycol monoalkyl ether; cyclic ethers such as tetrahydrofuran, tetrahydropyran, dioxane; dimethyl sulfoxide, etc.; or mixtures thereof, etc.

As the above-mentioned polymerization initiator, persulfates such as ammonium persulfate and potassium persulfate can be used (reducing agents such as sodium bisulfite, sodium pyrosulfite, cobalt naphthenate, dimethylaniline, etc. can also be used in combination as needed); redox initiators composed of oxidant (such as ammonium peroxide, potassium peroxide, etc.) and reducing agent (such as sodium sulfite, etc.) and transition metal salt (such as iron sulfate, etc.); diacyl peroxides such as acetyl peroxide and benzoyl peroxide; dialkoxycarbonyl peroxides such as isopropoxycarbonyl peroxide and tert-butoxycarbonyl peroxide; ketone peroxides such as methyl ethyl ketone peroxide and cyclohexanone peroxide; hydroperoxides such as hydrogen peroxide, tert-butyl hydroperoxide, and cumene hydroperoxide; dialkyl peroxides such as di-tert-butyl peroxide and dicumyl peroxide; alkyl peroxyesters such as tert-butyl peroxyacetate and tert-butyl peroxypivalate; and azo compounds such as 2,2'-azobisisobutyronitrile, 2,2'-azobis(2,4-dimethylvaleronitrile), 2,2'-azobis(2-methylvaleronitrile), 2,2'-azobis(2-cyclopropylpropionitrile), dimethyl 2,2'-azobisisobutyrate, 2,2'-azobis[2-(hydroxymethyl)propionitrile], and 4,4'-azobis(4-cyanopentenoic acid), etc.

### <Side chain>

The modified polymer of the present invention has side chain(s) based on the monomer represented by general formula (b) and (c).

CH₂=C(-R¹)-C(=O)-O-Si(-CH₃)₂-[O-Si(-CH₃)₂]ₙ-O-Si(-CH₃)₂-R² (b)

In formula (b), R¹ is a hydrogen atom or a methyl group, R² is a hydrogen atom or a methyl group, and n is 3 to 200.

CH₂=C(-R³)-C(=O)-X-Y (c)

In formula (c), R³ is a hydrogen atom or a methyl group, X is O or N, and Y is a group selected from a linear alkyl group, a cyclic alkyl group, a hydroxyl group, an amino group, a carboxyl group, an amide group, and an epoxy group.

In formula (b), n is 3 to 200, preferably 5 to 200, and more preferably 9 to 200.

The side chain based on the monomer represented by formula (b) can be low molecular weight or high molecular weight. From the viewpoint of compatibility, a low molecular weight is preferred. In the case of a low molecular weight, n is preferably 3 to 100, more preferably 5 to 80, and further preferably 9 to 70. From the viewpoint of anti-fouling, especially water and oil repellency, a high molecular weight is preferred. In the case of a high molecular weight, n is preferably 100 to 200, more preferably 120 to 200, and further preferably 140 to 200.

As specific examples of the side chain based on the monomer represented by formula (b), for example, the following structures can be mentioned but are not limited to these examples.

-CH₂-CH₂-C(=O)-O-Si(-CH₃)₂-[O-Si(-CH₃)₂]ₙ-O-Si(-CH₃)₂-H

-CH₂-CH₂-C(=O)-O-Si(-CH₃)₂-[O-Si(-CH₃)₂]ₙ-O-Si(-CH₃)₂-CH₃

-CH₂-CH(-CH₃)-C(=O)-O-Si(-CH₃)₂-[O-Si(-CH₃)₂]ₙ-O-Si(-CH₃)₂-H

-CH₂-CH(-CH₃)-C(=O)-O-Si(-CH₃)₂-[O-Si(-CH₃)_{2]n}-O-Si(-CH₃)₂-CH₃

In formula (c), Y is a group selected from a linear alkyl group, a cyclic alkyl group, a hydroxyl group, an amino group, a carboxyl group, an amide group, and an epoxy group. As a linear alkyl group, examples include a straight-chain alkyl group having 1 to 20 carbon atoms; as a cyclic alkyl group, examples include, a cycloalkyl group having 1 to 20 carbon atoms.

As specific examples of side chain based on the monomer represented by formula (c), for example, the following structures can be mentioned, but they are not limited to these examples.

-CH₂-CH₂-C(=O)-O-(CH₂)₂-H

-CH₂-CH₂-C(=O)-O-(CH₂)₂-OH

-CH₂-CH₂-C(=O)-O-(CH₂)₂N(-CH₃)SO₂-H

-CH₂-CH₂-C(=O)-O-(CH₂)₂N(-C₂H₅)SO₂-H

-CH₂-CH₂-C(=O)-O-CH₂CH(-OH)CH₂-H

-CH₂-CH₂-C(=O)-O-CH₂CH(-OCOCH₃)CH₂-H

-CH₂-CH₂-C(=O)-O-(CH₂)₂-COOH

-CH₂-CH₂-C(=O)-O-(CH₂)₂-NH₂

-CH₂-CH₂-C(=O)-O-(CH₂)₃-SO₂-H

-CH₂-CH₂-C(=O)-O-(CH₂)₂-SO₂-(CH₂)₂-H

-CH₂-CH₂-C(=O)-NH-(CH₂)₂-H

-CH₂-CH(-CH₃)-C(=O)-O-(CH₂)₂-H

-CH₂-CH(-CH₃)-C(=O)-O-(CH₂)₂-OH

-CH₂-CH(-CH₃)-C(=O)-O-(CH₂)₂N(-CH₃)SO₂-H

The modified polymer of the present invention is obtained by reacting (a) a fluoropolymer and monomers represented by the general formula (b) and the general formula (c) in an organic solvent in the presence of a free radical polymerization initiator.

The temperature of the above reaction is particularly preferably 60°C or more, more preferably 70°C or more, and further preferably 80°C or more. In addition, it is preferably 150°C or less, more preferably 140°C or less, and further preferably 135°C or less.

In the above reaction, the amount of the above monomer (b) is preferably 1 to 30 parts by mass relative to 100 parts by mass of the fluoropolymer (a). It is more preferably 1 to 20 parts by mass, and further preferably 2 to 10 parts by mass.

In the above reaction, the amount of the above monomer (c) is preferably 1 to 30 parts by mass relative to 100 parts by mass of the fluoropolymer (a). It is more preferably 1 to 20 parts by mass, and further preferably 2 to 10 parts by mass.

In the above-mentioned reaction, the fluoropolymer may react with monomer (b) and monomer (c) simultaneously, or may further react with monomer (c) after the fluoropolymer reacts with monomer (b). Preferably, the fluoropolymer reacts with monomer (b) and monomer (c) simultaneously. In the present invention, the side chain is preferably formed by copolymerization of monomer (b) and monomer (c).

As the organic solvent used in the above-mentioned reaction, examples include esters such as methyl acetate, ethyl acetate, propyl acetate, n-butyl acetate, tert-butyl acetate, etc.; ketones such as acetone, methyl ethyl ketone, cyclohexanone, etc.; aliphatic hydrocarbons such as hexane, cyclohexane, octane, nonane, decane, undecane, dodecane, mineral spirits, etc.; aromatic hydrocarbons such as benzene, toluene, xylene, naphthalene, solvent naphtha, etc.; alcohols such as methanol, ethanol, tert-butyl alcohol, isopropanol, ethylene glycol monoalkyl ether, etc.; cyclic ethers such as tetrahydrofuran, tetrahydropyran, dioxane, etc.; dimethyl sulfoxide, etc.; or mixtures thereof, etc.

As the above-mentioned free radical polymerization initiator, for example, persulfates such as ammonium persulfate and potassium persulfate can be used (reducing agents such as sodium bisulfite, sodium pyrosulfite, cobalt naphthenate, dimethylaniline, etc. can also be used in combination as needed); redox initiators composed of oxidant (such as ammonium peroxide, potassium peroxide, etc.) and reducing agent (such as sodium sulfite, etc.) and transition metal salt (such as iron sulfate, etc.); diacyl peroxides such as acetyl peroxide and benzoyl peroxide [BPO]; dialkoxycarbonyl peroxides such as isopropoxycarbonyl peroxide and tert-butoxycarbonyl peroxide; ketone peroxides such as methyl ethyl ketone peroxide and cyclohexanone peroxide; hydroperoxides such as hydrogen peroxide, tert-butyl hydroperoxide, and cumene hydroperoxide; dialkyl peroxides such as di-tert-butyl peroxide and dicumyl peroxide; alkyl peroxyesters such as tert-butyl peroxyacetate and tert-butyl peroxypivalate; azo compounds such as 2,2'-azobisisobutyronitrile, 2,2'-azobis(2,4-dimethylvaleronitrile), 2,2'-azobis(2-methylvaleronitrile), 2,2'-azobis(2-cyclopropylpropionitrile), 2,2'-azobisisobutyric acid dimethyl ester, 2,2'-azobis[2-(hydroxymethyl)propionitrile], and 4,4'-azobis(4-cyanopentenoic acid); etc.

The amount of the above-mentioned free radical polymerization initiator used is preferably 0.01 to 0.5 parts by mass relative to the total amount of monomers. It is more preferably 0.05 parts by mass or more, further preferably 0.1 parts by mass or more, and more preferably 0.3 parts by mass or less, further preferably 0.2 parts by mass or less.

The above-mentioned reaction is preferably further carried out in the presence of a chain transfer agent. As the above mentioned chain transfer agent, it is a thiol group-containing compound such as dodecyl mercaptan, lauryl mercaptan, thioethylene glycol, thioglycerol (especially (for example, alkyl mercaptan with 1 to 30 carbon atoms)), sodium hypophosphite, sodium bisulfite and other inorganic salts. The amount of the chain transfer agent used can be used in the range of 0.1 to 50 parts by mass, for example, 2 to 20 parts by mass relative to 100 parts by mass of the total amount of monomers.

The above reaction is preferably carried out by stirring a mixture containing a fluoropolymer, monomer (b) and monomer (c), an organic solvent and a free radical polymerization initiator.

As a specific method for obtaining the modified polymer of the present invention, examples include the following method: adding a fluoropolymer and an organic solvent to a reaction vassel, heating the vassel to a temperature of 80-90°C and stiring as needed, then adding the above-mentioned monomer (b) and monomer (c), and adding a chain transfer agent and a free radical polymerization initiator, then stiring the contents of the vassel.

The modified polymer of the present invention has a main chain of a fluoropolymer and side chain(s) with a specific structure, which can impart excellent anti-fouling properties in addition to the weather resistance and other characteristics of the fluoropolymer. In particular, when the modified polymer is used in a coating, the side chain based on monomer (c) makes it easier to combine the main chain composed of (a) fluoropolymer and the side chain based on monomer (b), thereby improving the compatibility of the system. As a result, the coating containing the modified polymer of the present invention has long-lasting anti-fouling properties.

The content of component (A) coating resin in the coating I of the present invention is 20 to 40% by mass. From the viewpoint of exerting the conventional performance as a coating film, it is preferably 22% by mass or more, more preferably 25% by mass or more, and further preferably 30% by mass or more; in addition, from the viewpoint of exerting the conventional performance as a coating film, the content of component (A) coating resin is preferably 40% by mass or less, and more preferably 38% by mass or less.

### <Component (B)>

Component (B) in the present invention is a porous filler. In order to achieve the long-term anti-icing effect of the present invention, the porous filler in the present invention is preferably a porous filler with a porosity of 30% or more. The porosity of the porous filler is preferably 40% or more, more preferably 50% or more, and further preferably 55% or more. In addition, from the viewpoint of exerting the conventional performance as a coating film, the porosity of the porous filler is preferably 500% or less, more preferably 400% or less, further preferably 350% or less, and further preferably 300% or less.

Regarding the material of the porous filler, in order to achieve the long-term anti-icing effect of the present invention, it is preferably one or more selected from silica, graphite, diatomaceous earth, mica powder, kaolin, calcium carbonate, titanium dioxide, zinc oxide, quartz powder, and barium sulfate. Among them, from the viewpoint of achieving a good long-term anti-icing effect, silica, kaolin, and calcium carbonate are preferred, and silica is more preferred.

The content of the porous filler of component (B) in the coating I of the present invention is 10 to 30% by mass, and from the viewpoint of achieving the long-term anti-icing effect of the present invention, it is preferably 11% by mass or more, more preferably 15% by mass or more, and further preferably 18% by mass or more; in addition, from the viewpoint of exerting the conventional performance as a coating film, the content of the porous filler is preferably 30% by mass or less, more preferably 28% by mass or less, and further preferably 27% by mass or less.

### <Component (C)>

Component (C) in the present invention is a hydrophobic agent, and there is no particular limitation as long as it is a hydrophobic agent commonly used in the field of coatings. As the hydrophobic agent of component (C), examples include one or more selected from (meth)acrylates, fluorine-containing (meth)acrylates, silicon-containing (meth)acrylates, dimethyl silicone oils, hydroxy silicone oils, amino silicone oils, perfluoroalkanes, and perfluoropolyethers, among which silicon-containing (meth)acrylates, dimethyl silicone oils, hydroxy silicone oils, and amino silicone oils are preferred, and dimethyl silicone oils and hydroxy silicone oils are more preferred.

For (meth)acrylates, examples include methyl acrylate, ethyl acrylate, methyl 2-methacrylate, and ethyl 2-methacrylate.

For fluorine-containing (meth)acrylates, examples include fluorine-containing (meth)acrylate homopolymers, random copolymers of fluorine-containing (meth)acrylates, fluorine-containing (meth)acrylate block copolymers, fluorine-containing (meth)acrylate core-shell polymers, etc. From the viewpoint of hydrophobicity, the fluorine content in the fluorine-containing (meth)acrylate is preferably 20% or more, more preferably 25% or more, and further preferably 30% or more.

For silicon-containing (meth)acrylate, examples include (meth)acrylated silane coupling agent (one end of which contains a (meth)acryloxy group and the other end contains an organic silicon group with other active functional groups), non-coupled silicon-containing mono (meth)acrylate, multi (meth)acrylate silane or siloxane, fluorine-containing (meth)acrylate siloxane, linear end (meth)acryloxy polysiloxane, multi (meth)acryloxy polysiloxane, (meth)acrylated cyclic polysiloxane, etc. From the viewpoint of hydrophobicity, the silicon content in the silicon-containing (meth)acrylate is preferably 30% or more, more preferably 33% or more, and further preferably 35% or more.

For dimethyl silicone oil, the main chain of its molecule is composed of silicon oxygen atoms, and the side chain connected to silicon is methyl. The weight average molecular weight of the dimethyl silicone oil used as the hydrophobic agent of component (C) in the present invention is 2000-50000, preferably 3000-50000, and more preferably 4000-50000.

The hydroxyl silicone oil used in the present invention is dimethyl hydroxyl silicone oil, and its structural formula is HO[(CH₃)₂SiO]ₙH, which is a linear polymer with repeated silicon oxygen bonds as the main chain, methyl as the side chain and hydroxyl end-capped. The weight average molecular weight of the hydroxyl silicone oil used as the hydrophobic agent of component (C) in the present invention is 2000-50000, preferably 3000-50000, and more preferably 4000-50000.

The amino silicone oil used in the present invention is, for example, obtained by reacting cyanopropylmethyldichlorosilane (or alkoxysilane), chloropropylmethyldichlorosilane (or alkoxysilane) with diethylamine to obtain aminoalkylsilane, which is then copolymerized with cyclotetrasiloxane after hydrolysis. The weight average molecular weight of the amino silicone oil used as the hydrophobic agent of component (C) in the present invention is 2000 to 50000, preferably 3000 to 50000, and more preferably 4000 to 50000.

The perfluoroalkane used in the present invention refers to a class of compounds formed by replacing all hydrogen atoms on the alkane molecular chain with fluorine atoms. Examples of perfluoroalkane include perfluorobutane, perfluorooctane, perfluorohexane, and perfluoromethylcyclohexane.

The main chain of the perfluoropolyether used in the present invention is composed of an ether chain such as -CF₂-O-CF₂-. The weight average molecular weight of the perfluoropolyether used in the present invention is 2000 to 50000, preferably 3000 to 50000, and more preferably 4000 to 50000.

The content of the hydrophobic agent of component (C) in the coating I of the present invention is 2 to 20% by mass. From the viewpoint of achieving the long-term anti-icing effect of the present invention, it is preferably 2.5% by mass or more, more preferably 3% by mass or more, and further preferably 5% by mass or more; in addition, from the viewpoint of hydrophobicity, the content of the hydrophobic agent of component (C) in the coating of the present invention is preferably 20% by mass or less, more preferably 18% by mass or less, and further preferably 15% by mass or less.

### <Component (D)>

The component (D) in the present invention is a wax having a melting point of 60°C to 160°C. As component (D) in the present invention, examples include paraffin wax, polyoxyethylene wax, polyethylene wax, polypropylene wax, polyamide wax, and polytetrafluoroethylene wax. Among them, from the viewpoint of aging resistance, polyoxyethylene wax, polyethylene wax, polypropylene wax, polyamide wax, polytetrafluoroethylene wax are preferred, and polyoxyethylene wax, polyethylene wax, polypropylene wax, polytetrafluoroethylene wax are more preferred.

Regarding component (D), from the viewpoint of aging resistance, its melting point is preferably 60°C or more, more preferably 65°C or more, and further preferably 70°C or more; in addition, from the viewpoint of floatability, its melting point is preferably 160°C or less, preferably 150°C or less, and further preferably 140°C or less.

The content of component (D) wax in the coating I of the present invention is 1 to 10% by mass, and from the viewpoint of achieving the long-term anti-icing effect of the present invention, it is preferably 1.2% by mass or more, and more preferably 1.5% by mass or more; in addition, from the viewpoint of coating film flatness, the content of component (D) wax in the coating of the present invention is preferably 10% by mass or less, more preferably 9.7% by mass or less, and further preferably 8.5% by mass or less.

### <Component (E)>

The component (E) in the present invention is an organic solvent, and there is no particular limitation as long as it is an organic solvent commonly used in the field of coatings. As the component (E) organic solvent, examples include esters such as ethyl acetate, n-butyl acetate, tert-butyl acetate, isopropyl acetate, isobutyl acetate, cellosolve acetate, and propylene glycol methyl ether acetate; ketones such as acetone, methyl ethyl ketone, methyl isobutyl ketone, and cyclohexanone; cyclic ethers such as tetrahydrofuran and dioxane; amides such as N,N-dimethylformamide and N,N-dimethylacetamide; aromatic hydrocarbons such as toluene and xylene; alcohols such as propylene glycol methyl ether; hydrocarbons such as hexane and heptane; mixed solvents thereof, etc. In addition, examples also include the third type of organic solvent of the Occupational Safety and Health Standards, which is called a weak solvent, and a solvent equivalent thereto. As the component (E) organic solvent, preferably: acetone, n-butyl acetate (BAC), xylene, propylene glycol methyl ether acetate (PMA), cyclohexanone, methyl amyl ketone (MAK), methyl ethyl ketone (MEK), a dibasic acid ester mixture (DBE), and a combination solvent formed by two or more of them.

The content ratio of each component in the combined solvent can be adjusted according to actual conditions.

### <Other components>

The coating I of the present invention may further contain other components in addition to the above-mentioned ingredients. As other components, examples include additives such as leveling agents, defoamers, pigments and dyes, dispersants, and preservatives commonly used in the coating field. The types and contents of these additives in the coating of the present invention can be selected and formulated as needed.

In addition, the coating I of the present invention may further contain a curing agent g1. As the curing agent g1, the type and amount of the curing agent g1 can be selected and determined according to the type and content of the coating resin of component (A). The types of curing agent g1 can be divided into HDI type, XDI type, IPDI type, and MDI type. Generally speaking, the curing agent g1 is stored separately from the coating I, and the curing agent g1 is added to the coating I 10 minutes to 2 hours before the coating is applied.

### <Coating I>

The coating I of the present invention contains the above-mentioned components (A) to (E):
Component (A): a coating resin in an amount of 20 to 40% by mass,
Component (B): a porous filler in an amount of 10 to 30% by mass,
Component (C): a hydrophobic agent in an amount of 2 to 20% by mass,
Component (D): a wax with a melting point of 60 to 160°C in an amount of 1 to 10% by mass,
Component (E): an organic solvent in an amount of balance.

For the coating I of the present invention, on the one hand, the component (B) porous filler adsorbs and slowly releases the component (C) hydrophobic agent through the adsorption-slow release properties, so that the component (C) hydrophobic agent can work for a long time, thereby achieving a long-term and efficient anti-icing effect. On the other hand, the component (D) wax with a melting point of 60 to 160°C contained in the coating I of the present invention is also a component that has an anti-icing effect. When the coating film made from the coating I of the present invention is exposed to the atmosphere for a long time, as time passes, the component (D) wax with a melting point of 60 to 160°C gradually migrates (in the present invention, "migrate" mainly refers to "float") to the surface of the coating film, thereby further achieving a long-term and efficient anti-icing effect.

In the coating I of the present invention, from the viewpoint of achieving a long-term and efficient anti-icing effect with good synergy between component (B) and component (C), the mass ratio (B)/(C) of the content of component (B) to the content of component (C) is preferably set to 0.5 or more, more preferably 0.9 or more, further preferably 1.1 or more, and further more preferably 3.0 or more. In addition, it is preferably set to 10 or less, more preferably 9.4 or less, further preferably 8.6 or less, and further more preferably 6.5 or less. In addition, in the present invention, the mass ratio (B)/(C) is preferably 0.9 to 9.4, more preferably 1.1 to 8.6, and further preferably 3.0 to 6.5.

In the coating I of the present invention, from the viewpoint of achieving a long-term and efficient anti-icing effect with good synergy among components (B), (C) and (D), the mass ratio [(B)+(C)]/(D) of the total content of component (B) and component (C) relative to the content of component (D) is preferably set to 2 or more, more preferably 2.4 or more, further preferably 5 or more, and further more preferably 7 or more. Additionally, it is preferably set to 24 or less, further preferably 23.6 or less, and further more preferably 20 or less. In addition, in the present invention, the mass ratio [(B)+(C)]/(D) is preferably 2.4 to 23.6, more preferably 2.6 to 23.6, and further preferably 7 to 20.

### <Preparation of coating I>

The coating I of the present invention can be prepared by conventional methods. For example, the following method can be used: first, the above-mentioned component (A) coating resin, component (B) porous filler, part of component (E) organic solvent, and dispersant used as needed are added to a sander containing glass beads and ground for 1 to 3 hours; then, the slurry obtained by grinding is added to a stirred-tank, and component (C) hydrophobic agent, component (D) wax, and the remaining part of component (E) organic solvent, as well as leveling agent, defoaming agent, etc. as needed are further added to the stirred-tank, and then the coating is prepared by filtering after stirring for 10 to 120 minutes at a speed of 600 to 2000 rpm.

### <Preparation of coating film I>

The coating I of the present invention can be applied by conventional methods. For example, after further adding an appropriate amount of curing agent to the above-prepared coating I and stirring evenly, it is then applied by roller coating, spray coating, flow coating or the like. The coating I of the present invention forms a coating film I after coating and volatilization of the organic solvent, and the coating film I can be cured at 5°C to 300°C to become an anti-icing coating film.

The anti-icing effect of the coating film I of the present invention can be evaluated by measuring the water contact angle. After the coating film I of the present invention is prepared, the initial water contact angle of the coating film I is 95° to 110°. After the coating film I is exposed to ultraviolet to age by artificial radiation for 3000 hours (in this application specification, "after exposure to ultraviolet to age by artificial radiation for 3000 hours " is sometimes referred to as "QUVB3000h"), the water contact angle of the coating film I is maintained or increased to be 95° to 135°.

The coating film I in the present invention is measured for the initial water contact angle, the water contact angle of QUVB1000h (after exposure to ultraviolet to age by artificial radiation (QUVB) for 1000 hours), the water contact angle of QUVB2000h (after exposure to ultraviolet to age by artificial radiation (QUVB) for 2000 hours), and the water contact angle of QUVB3000h (after exposure to ultraviolet to age by artificial radiation (QUVB) for 3000 hours) according to GB/T 30693-2014. Specifically, the coating is applied at 0.02g/cm² on a test sample plate (sample size: length 15cm×width 7cm), and cured at 25°C for 7 days to prepare a test sample plate (sample plate size: length 15cm×width 7cm). The initial, QUVB1000h, QUVB2000h, or QUVB3000h sample plates were placed on the platform of the water contact angle meter and fixed. After that, the sample plates were tested using water with a volume per drop of 2 µL. Six data were measured for each sample plate, and the average value was taken as the result and recorded in the following table.

The present invention also provides a modified polymer, which is the modified polymer (A') mentioned above.

The present invention also provides a coating II, which contains the modified polymer (A') mentioned above, a curing agent g2 and an organic solvent E2. The content of the modified polymer (A') in the coating II is 60%. The content of the curing agent g2 and the organic solvent E2 in the coating II can be appropriately set with reference to conventional techniques in the coating field.

As the organic solvent E2, the same substance as the above-mentioned component (E) can be used.

As the curing agent g2, the same substance as the above-mentioned curing agent g1 can be used. On the other hand, considering that the coating II contains a specific modified polymer (A'), the curing agent g2 is preferably a compound that reacts with the curing functional group of the above-mentioned fluoropolymer containing a curable functional group to crosslink, for example, isocyanates, amino resins, acid anhydrides, polyepoxides, silane compounds containing isocyanate groups, etc. are generally used. Among them, isocyanates are preferred.

The coating II of the present invention may also further contain additives commonly used in the coating field. As the additive, examples can include curing accelerators, pigments, dispersants, flow improvers, leveling agents, defoamers, gelation inhibitors, ultraviolet absorbers, antioxidants, hydrophilizing agents, matting agents, adhesion improvers, flame retardants, etc. The content of these additives can be appropriately determined according to known techniques and conventional requirements.

### <Preparation of coating II>

The coating II of the present invention can be prepared by conventional methods. For example, in a stirred-tank, the above-mentioned modified polymer, curing agent, organic solvent E2, and additives added as needed are added in sequence, and the mixture is stirred at a speed of 600 to 2000 rpm for 10 to 120 minutes, and then filtered to form a coating.

### <Preparation of coating film II>

The present invention also provides a coating film II, which is obtained by applying the coating II of the present invention. The coating II of the present invention can be applied by conventional methods to obtain a coating film II. For example, after the coating II is obtained as described above, it is applied by roller coating, spray coating, curtain coating, or the like. The coating II of the present invention forms a coating film II after coating and volatilization of the organic solvent, and the coating film II can be dried and cured at 5°C to 300°C, usually at 100°C to 200°C for 30 seconds to 3 days.

The coating film II has excellent weather resistance and anti-fouling properties by having the modified polymer of the present invention. The coating film II is preferably a cured coating film.

### [Examples 1-1 to 1-12, Examples 2-1 to 2-9 and Comparative Examples 1 to 9]

The coating I of the examples and comparative examples was prepared according to the composition shown in Tables 1 to 3 below. For the coating I of the examples and comparative examples, the curing agent was prepared with the composition shown in the following table, and after stirring at a speed of 800 r/min for 30 minutes, a test sample plate was prepared by using a spray coating method.

The values recorded in Tables 1 to 3 are all amounts expressed as effective ingredients. In addition, the amounts of curing agent recorded in Tables 1 to 3 (mass %) are the amounts when the amounts of coating is calculated as 100 mass %.

The detailed information of each component used in the examples and comparative examples is as follows.

DKF-025: Hydroxy acrylic resin as component (A), model: DKF-025, produced by Dongsheng Chemical Co., Ltd.

Polymer (i): 1840.0g of butyl acetate, 620.0g of vinyl neononanoate, and 160.0g of 4-hydroxybutyl vinyl ether (HBVE) were placed in a 6000ml stainless steel autoclave, and the pressure was reduced and the atmosphere was replaced with nitrogen. 478.0g of tetrafluoroethylene (TFE) was added. The temperature of the reactor was raised to 60°C, and a specified amount of peroxide initiator was added, and the reaction was carried out at 60°C for 5 hours to obtain polymer (i). The hydroxyl value of the obtained polymer was 63.0 mgKOH/g.

Polymer (ii): Add 200g of polymer (i) and 20g of butyl acetate as the main chain reaction solution to a 1L reaction vassel, heat to 90°C, and stir for 30 minutes. Then, a mixed solution of 6.5 g of tridecafluorooctyl acrylate, 1.3 g of butyl 4-hydroxyacrylate, 1.3 g of glycidyl methacrylate, 0.1365 g of chain transfer agent dodecyl mercaptan, 0.1183 g of dibenzoyl peroxide initiator, and 15 g of butyl acetate was added dropwise over 1 hour. Then, the mixture was stirred at 90°C for 2 hours to synthesize polymer (ii). Both the main chain and the side chain(s) of polymer (ii) contain fluorine.

Polymer (iii): 200 g of polymer (i) and 20 g of butyl acetate of the main chain reaction solution were added to a 1L reaction vassel, the temperature was raised to 90°C, and the mixture was stirred for 30 minutes. Then, a mixed solution of 3.9 g of polydimethylsiloxane acrylate, 0.78 g of butyl 4-hydroxyacrylate, 0.05148 g of chain transfer agent dodecyl mercaptan, 0.06084 g of dibenzoyl peroxide initiator, and 15 g of butyl acetate was added dropwise over 1 hour. After stirring at 90°C for 2 hours, polymer (iii) was synthesized. The main chain of polymer (iii) contains fluorine and the side chain(s) contains silicon. Polymer (iii) is a component corresponding to the modified polymer (A').
Silicon dioxide: porosity 200-300%, model: TS-100, produced by Evonik Degussa.
Kaolin: porosity 50-100%, model: HY-T-80, produced by Shanxi Hengyuan Company.
Calcium carbonate: porosity 30-50%, model: Z-2000, produced by Nanjing Chendong New Materials Company.
Silicone oil 14K: dimethyl silicone oil, weight average molecular weight 13700, model: STARSIL DM350, produced by Xinghuo Silicone Company.
Silicone oil 50K: dimethyl silicone oil, weight average molecular weight 50000, model: STARSIL DM5000, produced by Xinghuo Silicone Company.
Perfluoroalkane 2K: Perfluoroalkane, weight average molecular weight 2000, model: DEMNUM S20, produced by Daikin Fluorochemical Co., Ltd.
Polyethylene wax: melting point 100-120°C, model: CERAFLOUR 991, produced by BYK.
Paraffin wax: melting point 60-70°C, model: TP-66, produced by Tianshi Wax Powder Co., Ltd.
Polypropylene wax: melting point 160°C, model: BYK-970, produced by BYK.
Curing agent: HDI trimer, model: N3390, produced by Covestro.
Leveling agent: BYK358N, produced by BYK.
Defoaming agent: BYK052N, produced by BYK.

**Table 1**

| | | | Example 1-1 | Example 1-2 | Example 1-3 | Example 1-4 | Example 1-5 | Example 1-6 | Example 1-7 | Example 1-8 | Example 1-9 | Example 1-10 | Example 1-11 | Example 1-12 |
|---|---|---|---|---|---|---|---|---|---|---|---|---|---|---|
| Coating composition (mass %) | Component (A) | DKF-025 | | | | | | | | | | | | |
| | | Polymer(i) | | | | | | | | | | | | |
| | | Polymer(ii) | | | | | | | | | | | | |
| | | Polymer(iii) | 20 | 27.9 | 40 | 30.4 | 34.2 | 32.8 | 28.9 | 35.6 | 20.5 | 25 | 22.4 | 29.3 |
| | Component (B) | Silicon dioxide | 11.2 | 18.9 | 15.4 | 10 | 18.3 | 30 | 17.2 | 25.9 | 27.2 | 11.2 | 15.4 | 21.4 |
| | | Kaolin | | | | | | | | | | | | |
| | | Calcium carbonate | | | | | | | | | | | | |
| | Component (C) | Silicone oil 14K | 8.4 | 4.4 | 6.8 | 11 | 5 | 3.2 | 2 | 4.8 | 20 | 10.1 | 2.5 | 4.9 |
| | Component (D) | Polyethylene wax | 5.2 | 9.7 | 1.5 | 4.5 | 7.2 | 2.1 | 3.8 | 1.3 | 2.5 | 1 | 2.5 | 10 |
| | Component (E) | n-Butyl acetate | Balance | Balance | Balance | Balance | Balance | Balance | Balance | Balance | Balance | Balance | Balance | Balance |
| | Other components | Leveling agent | 0.2 | 0.2 | 0.2 | 0.2 | 0.2 | 0.2 | 0.2 | 0.2 | 0.2 | 0.2 | 0.2 | 0.2 |
| | | Defoaming agent | 0.2 | 0.2 | 0.2 | 0.2 | 0.2 | 0.2 | 0.2 | 0.2 | 0.2 | 0.2 | 0.2 | 0.2 |
| Mass ratio (B)/(C) | | | 1.3 | 4.3 | 2.3 | 0.9 | 3.7 | 9.4 | 8.6 | 5.4 | 1.4 | 1.1 | 6.2 | 4.4 |
| Mass ratio[(B)+(C)]/(D) | | | 3.8 | 2.4 | 14.8 | 4.7 | 3.2 | 15.8 | 5.1 | 23.6 | 18.9 | 21.3 | 7.2 | 26 |
| Total (mass %) | | | 100 | 100 | 100 | 100 | 100 | 100 | 100 | 100 | 100 | 100 | 100 | 100 |
| Curing agent | | N3390 (mass%) | 4.6 | 6.5 | 9.3 | 7.0 | 7.9 | 7.6 | 6.7 | 8.2 | 4.7 | 5.8 | 5.2 | 6.8 |
| Evaluation results | Water contact angle | Initial | 105.6 | 107.8 | 106.5 | 107.1 | 107.5 | 107.8 | 103.0 | 106.5 | 109.0 | 106.8 | 107.2 | 108.3 |
| | | QUVB1000h | 122.6 | 129.1 | 108.9 | 113.4 | 122.5 | 117.2 | 101.4 | 121.2 | 115 | 111.2 | 123.1 | 113.6 |
| | | QUVB2000h | 113.8 | 129.2 | 109.4 | 115.2 | 123.4 | 119.7 | 108.2 | 122.4 | 120.4 | 119.5 | 124.8 | 120.4 |
| | | QUVB3000h | 108.2 | 129.4 | 108.6 | 103.6 | 124.5 | 123.6 | 105.7 | 123.4 | 122.6 | 120.3 | 125.4 | 125.8 |

**Table 2**

| | | | | Example 2-1 | Example 2-2 | Example 2-3 | Example 2-4 | Example 2-5 | Example 2-6 | Example 2-7 | Example 2-8 | Example 2-9 |
|---|---|---|---|---|---|---|---|---|---|---|---|---|
| Coating composition (mass%) | Component(A) | | DKF-025 | 30.6 | | | | | | | | |
| | | | Polymer(i) | | 28.5 | | | | | | | |
| | | | Polymer(ii) | | | 33.2 | | | | | | |
| | | | Polymer(iii) | | | | 29.2 | 31.6 | 24.5 | 21.5 | 31.4 | 35.8 |
| | Component (B) | | Silicon dioxide | 21.2 | 24.6 | 15.4 | | | 12.4 | 28.7 | 22.8 | 19.6 |
| | | | Kaolin | | | | 28.2 | | | | | |
| | | | Calcium carbonate | | | | | 16.8 | | | | |
| | Component (C) | | Silicone oil 14K | 8 | 3.2 | 17.1 | 3.2 | 7.6 | | | 11.5 | 3.8 |
| | | | Silicone oil 50K | | | | | | 5.1 | | | |
| | | | Perfluoroalkanes 2K | | | | | | | 18.2 | | |
| | Component (D) | | Polyethylene wax | 7.3 | 1.7 | 5.5 | 1.5 | 4.8 | 3.6 | 3.5 | | |
| | | | Paraffin wax | | | | | | | | 3.2 | |
| | | | Polypropylene wax | | | | | | | | | 8.5 |
| | Component (E) | | n-Butyl acetate | Balance | Balance | Balance | Balance | Balance | Balance | Balance | Balance | Balance |
| | Other component | | Leveling agent | 0.2 | 0.2 | 0.2 | 0.2 | 0.2 | 0.2 | 0.2 | 0.2 | 0.2 |
| | | | Defoaming agent | 0.2 | 0.2 | 0.2 | 0.2 | 0.2 | 0.2 | 0.2 | 0.2 | 0.2 |
| Mass ratio(B)/(C) | | | | 2.7 | 7.7 | 0.9 | 8.8 | 2.2 | 2.4 | 1.6 | 2.0 | 5.2 |
| Mass ratio[(B)+(C)]/(D) | | | | 4.0 | 16.4 | 5.9 | 20.9 | 5.1 | 4.9 | 13.4 | 10.7 | 2.8 |
| Total (mass%) | | | | 100 | 100 | 100 | 100 | 100 | 100 | 100 | 100 | 100 |
| Curing agent | | | N3390 (mass%) | 3.3 | 3.6 | 7.7 | 6.8 | 7.3 | 5.7 | 5.0 | 7.3 | 8.3 |
| Evaluation result | | Water contact angle | Initial | 103.1 | 103.1 | 108.9 | 105.9 | 104.7 | 107.4 | 107 | 106.4 | 104.5 |
| | | | QUVB1000h | 104.2 | 118.5 | 118.7 | 126.4 | 123.2 | 128.3 | 112.6 | 125.8 | 123.9 |
| | | | QUVB2000h | 100.5 | 118 | 119.3 | 126.6 | 123.4 | 128.1 | 112.4 | 125.4 | 123.7 |
| | | | QUVB3000h | 95.8 | 117.9 | 119.5 | 126.6 | 123.5 | 128.4 | 113.2 | 125.9 | 123.8 |

**Table 3**

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|
| Coating composition (mass%) | Component(A) | DKF-025 | 28.6 | | | | | | | | |
| | | Polymer(i) | | 26.4 | | | | | | | |
| | | Polymer(ii) | | | 31.4 | | | | | | |
| | | Polymer(iii) | | | | 24.5 | 35.7 | 22.8 | 36.8 | 32.4 | 27.5 |
| | Component (B) | Silicon dioxide | | | | | 20.2 | | | 25.2 | 19.5 |
| | | Titanium Dioxide | | | | | | | | | |
| | Component (C) | Silicone oil 14K | | | | | | 109 | | 4.5 | |
| | Component (C') ) | Silicon modified acrylate (≤2000) | | | | | | | | | |
| | | Silicone oil ≤5W | | | | | | | | | |
| | Component (D) | Polyethylene wax | | | | | | | 8.2 | | 5.6 |
| | Component (D') | PTFE wax (Melting point >300'C) | | | | | | | | | |
| | Component (E) | n-Butyl acetate | Balance | Balance | Balance | Balance | Balance | Balance | Balance | Balance | Balance |
| | Other component | Leveling agent | 0.2 | 0.2 | 0.2 | 0.2 | 0.2 | 0.2 | 0.2 | 0.2 | 0.2 |
| | | Defoaming agent | 0.2 | 0.2 | 0.2 | 0.2 | 0.2 | 0.2 | 0.2 | 0.2 | 0.2 |
| Total (mass%) | | | 100 | 100 | 100 | 100 | 100 | 100 | 100 | 100 | 100 |
| Curing agent | | N3390 (mass%) | 3.1 | 3.4 | 7.3 | 5.7 | 8.3 | 5.3 | 8.5 | 7.5 | 6.4 |
| Evaluation result | Water contact angle | Initial | 753 | 85.1 | 107.8 | 102.5 | 103.7 | 105.9 | 103.2 | 102 | 106.2 |
| | | QUVB1000h | 73.1 | 81.7 | 97.1 | 95.3 | 87.2 | 93.2 | 82.6 | 104.8 | 90 |
| | | QUVB2000h | 71.8 | 79.1 | 88.9 | 86.3 | 83.4 | 89.7 | 77.5 | 95.1 | 80.3 |
| | | QUVB3000h | 67.4 | 76 | 85.4 | 83.6 | 81.5 | 86.4 | 76.8 | 87.7 | 78.6 |

As can be seen from Table 1 and Table 2: by containing specific components (B), component (C) and component (D) in specific amounts, the coatings of Examples 1-1 to 1-12 and Examples 2-1 to 2-10not only had an initial water contact angle of the coating film reaching a high value of 95° to 110°, but also had the water contact angle of the coating film after being exposed to ultraviolet to age for 3000 hours by artificial radiation maintained or increased which could still reach a higher value of 95° to 135°.

On the other hand, it can be seen from Table 3:
For Comparative Examples 1 and 2, which only contained component (A), the initial water contact angle of the coating film and the water contact angle after being exposed to ultraviolet to age for 3000 hours by artificial radiation could not reach 95° to 110°, indicating that it cannot achieve good anti-icing effect;
For Comparative Examples 3 and 4 containing only component (A), Comparative Example 5 containing only component (A) and component (B), Comparative Example 6 containing only component (A) and component (C), and Comparative Example 7 containing only component (A) and component (D), although the initial angle of the coating film reached a relatively high value of 95° to 110°, the water contact angle of the coating film after being exposed to ultraviolet to age for 3000 hours by artificial radiation did not reach 95° to 110°, and a significant decrease could be observed, indicating that the durability of the anti-icing effect is poor.

Regarding Comparative Example 8, which did not contain component (D), and Comparative Example 9, which did not contain component (C), although the initial contact angle of the coating film reached a relatively high value of 95° to 110°, the water contact angle of the coating film after being exposed to ultraviolet to age for 3000 hours by artificial radiation did not reach 95° to 110°, and a significant decrease was observed, indicating that the durability of its anti-icing effect is poor.

### [Example 3 and Comparative Example I]

The coatings II of Example 3 and Comparative Example were prepared according to the compositions shown in Table 4 below. The test sample plates were prepared by spray coating method using the coatings II.

The detailed information of each component used in Example 3 and Comparative Example I is as follows.
Polymer (i): The same as polymer (i) in Table 1 to Table 3 above.
Polymer (iii): The same as polymer (iii) in Table 1 to Table 3 above.
Curing agent: HDI trimer, model: N3390, produced by Covestro.
Leveling agent: BYK358N, produced by BYK.
Defoaming agent: BYK052N, produced by BYK.

### <Anti-fouling performance test method>

Referring to GB/T9780-2013, "Test method for stain resistance of architectural coating layers", the anti-fouling performance was evaluated, and the specific steps are as follows.
i) Coating film preparation: Use cement board as the substrate, prepare a coating film according to the coating film preparation method, and place it at 25°C for 7 days for curing.
ii) Preparation of pollution source suspension: Weigh an appropriate amount of experimental ash standard sample, mix with water in a ratio of 1:1, and stir evenly to prepare a suspension.
iii) Initial reflection coefficient test: After curing, test the initial reflection coefficient of the coating film at the top, middle and bottom positions, and take the average value A.
iv) Brush plate: Use a soft brush to evenly apply the pollution suspension on the surface of the coating test plate horizontally and then vertically. The amount of pollution source suspension applied is (0.7±0.1)g per specimen.
v) Quick drying: Place the test plate in an oven of 60°C ±2 for 30min, take it out and place it under standard experimental conditions for 2h.
vi) Post-pollution reflection coefficient test: Place the sample plate on the sample holder of the flushing device, open the valve of the flushing device filled with 15L of water to the maximum position, and flush the coating sample plate. Move the coating sample plate continuously during flushing so that the water flow can evenly flush all parts. After flushing, place the sample plate for 24h for testing.
vii) Reflection coefficient test after pollution: Test the reflection coefficient of the coating at the top, middle and bottom positions, and take the average value B.
viii) Calculation of stain resistance: X outside = |A-B|/A × 100%

For the prepared coating film, the above <Anti-fouling performance test method> was used for measurement at the initial stage of preparation, after being exposed to ultraviolet to age by artificial radiation(QUVB), for 2000 hours, and after 5 months of outdoor exposure. The smaller the measured X value, the better the anti-fouling performance.

**Table 4**

| | | | Comparative Example I | Comparative Example II | Example |
|---|---|---|---|---|---|
| Coating composition (mass%) | Coating resin | DKF-025 | 60 | | |
| | | Polymer (i) | | 60 | |
| | | Polymer (iii) | | | 60 |
| | Organic solvents | n-Butyl acetate | Balance | Balance | Balance |
| | Other component | Leveling agent BYK358N | 0.2 | 0.2 | 0.2 |
| | | Defoaming agent BYK052N | 0.2 | 0.2 | 0.2 |
| | Curing agent | N3390 | 6.5 | 8.8 | 20.4 |
| Total (mass%) | | | 100 | 100 | 100 |
| Anti-fouling performance (%) | | Initial | 6.4% | 3.9% | 2.5% |
| | | QUVB2000h | 15.8% | 8.2% | 5.3% |
| | | 5 months of outdoor exposure | 13.5% | 6.4% | 2.8% |

The coating film obtained in the example has a stain resistance of 5.3% after QUVB 2000h aging; and a stain resistance of 2.8% after 5 months of outdoor exposure, showing good stain resistance.

## Claims

1. A coating comprising the following components (A) to (E), Component (A): a coating resin in an amount of 20 to 40% by mass,
Component (B): a porous filler in an amount of 10 to 30% by mass,
Component (C): a hydrophobic agent in an amount of 2 to 20% by mass,
Component (D): a wax with a melting point of 60 to 160°C in an amount of 1 to 10% by mass,
Component (E): an organic solvent in an amount of balance.

2. The coating according to claim 1, wherein,
the component (A) is one or more selected from hydroxy acrylic resin, polyester resin, silicone resin, fluorocarbon resin, and fluorosilicone resin.

3. The coating according to claim 2, wherein,
the component (A) is a fluorosilicone resin.

4. The coating according to claim 1, wherein,
the component (A) is a modified polymer containing:
a main chain composed of (a) a fluoropolymer, and
side chain(s) based on monomers represented by the following general formulas (b) and (c),
CH₂=C(-R¹)-C(=O)-O-Si(-CH₃)₂-[O-Si(-CH₃)₂]ₙ-O-Si(-CH₃)₂-R² (b)
in formula (b), R¹ is a hydrogen atom or a methyl group, R² is a hydrogen atom or a methyl group, and n is 3 to 200,
CH₂=C(-R³)-C(=O)-X-Y (c)
in formula (c), R³ is a hydrogen atom or a methyl group, X is O or N, and Y is a group selected from a linear alkyl group, a cyclic alkyl group, a hydroxyl group, an amino group, a carboxyl group, an amide group, and an epoxy group.

5. The coating according to claim 1, wherein,
the component (B) is a porous filler having a porosity of 30% or more.

6. The coating according to any one of claims 1 to 4, wherein,
the component (B) is one or more selected from silica, graphite, diatomaceous earth, mica powder, kaolin, calcium carbonate, titanium dioxide, zinc oxide, quartz powder, and barium sulfate.

7. The coating according to claim 6, wherein,
the component (B) is one or more selected from silica, kaolin, and calcium carbonate.

8. The coating according to any one of claims 1 to 5, wherein,
the component (C) is one or more selected from (meth)acrylate, fluorine-containing (meth)acrylate, silicon-containing (meth)acrylate, dimethyl silicone oil, hydroxyl silicone oil, amino silicone oil, perfluoroalkane, and perfluoropolyether.

9. The coating according to claim 8, wherein,
the weight average molecular weight of the component (C) is 2000 to 50000.

10. The coating according to any one of claims 1 to 5, wherein,
the mass ratio (B)/(C) of the content of the component (B) to the content of the component (C) is 0.9 to 9.4.

11. The coating according to claim 10, wherein,
the mass ratio (B)/(C) of the content of the component (B) to the content of the component (C) is 1.1 to 8.6.

12. The coating according to claim 10, wherein,
the mass ratio (B)/(C) of the content of the component (B) to the content of the component (C) is 3.0 to 6.5.

13. The coating according to any one of claims 1 to 5, wherein,
the mass ratio [(B)+(C)]/(D) of the total content of the component (B) and the component (C) to the content of the component (D) is 2.4 to 23.6.

14. The coating according to claim 13, wherein,
the mass ratio [(B)+(C)]/(D) of the total content of the component (B) and the component (C) to the content of the component (D) is 7 to 20.

15. The coating according to any one of claims 1 to 5, wherein,
the component (D) is one or more selected from paraffin wax, polyoxyethylene wax, polyethylene wax, polypropylene wax, polyamide wax, and polytetrafluoroethylene wax.

16. A coating film obtained by applying the coating according to any one of claims 1 to 15.

17. The coating film according to claim 16, wherein,
the initial water contact angle of the coating film is 95° to 110°; and/or
the water contact angle of the coating film after exposure to ultraviolet to age by artificial radiation for 3000 hours is 95° to 135°.

18. Use of the coating according to any one of claims 1 to 15 for anti-icing.

19. The use according to claim 18, wherein,
the coating is used for wind turbine blades, bridge cables, power systems, and heat exchanger fins.

20. A modified polymer comprising:
a main chain composed of (a) a fluoropolymer, and
side chains based on monomers represented by general formulas (b) and (c),
CH₂=C(-R¹)-C(=O)-O-Si(-CH₃)₂-[O-Si(-CH₃)₂]ₙ-O-Si(-CH₃)₂-R² (b)
in formula (b), R¹ is a hydrogen atom or a methyl group, R² is a hydrogen atom or a methyl group, and n is 3 to 200,
CH₂=C(-R³)-C(=O)-X-Y (c)
in formula (c), R³ is a hydrogen atom or a methyl group, X is O or N, and Y is a group selected from a linear alkyl group, a cyclic alkyl group, a hydroxyl group, an amino group, a carboxyl group, an amide group, and an epoxy group.

21. The modified polymer according to claim 20, wherein,
the fluoropolymer (a) contains polymerization units based on tetrafluoroethylene or chlorotrifluoroethylene.

22. A coating comprising:
the modified polymer according to claim 20 or 21, a curing agent and an organic solvent.

23. A coating film obtained by applying the coating according to claim 22.

24. Use of the coating according to claim 22 for anti-fouling.
